Europäisches Patentamt

European Patent Office

Office européen des brevets

(19)

(11) Veröffentlichungsnummer: **0 176 887**
**A1**

## (12) EUROPÄISCHE PATENTANMELDUNG

(21) Anmeldenummer: 85111924.8

(22) Anmeldetag: 20.09.85

(51) Int. Cl.⁴: **A01K 95/00**

(30) Priorität: 28.09.84 AT 3073/84

(43) Veröffentlichungstag der Anmeldung:
09.04.86 Patentblatt 86/15

(84) Benannte Vertragsstaaten:
BE CH DE FR GB IT LI NL SE

(71) Anmelder: METALLWERK PLANSEE
GESELLSCHAFT M.B.H.

A-6600 Reutte, Tirol(AT)

(72) Erfinder: Poisel, Manfred
Waaler Strasse 38
D-8938 Buchloe(DE)
Erfinder: Glätzle, Wolfgang, Dr.
Breitenwanger Strasse 7
A-6600 Reutte(AT)

(74) Vertreter: Lohnert, Wolfgang, Dr.
Metallwerk Plansee GmbH
A-6600 Reutte, Tirol(AT)

(54) Sinker für Angelschnüre.

(57) Ein zweiteiliger Sinker für Angelschnüre besteht aus einem zylinderförmigen ersten Teil (1) und aus einer das erste Teil umschließenden in Längsrichtung geschlitzten Hülse (3). Das erste Teil (1) weist in Längsrichtung eine durchgehende sektorförmige Ausnehmung (2) zur Aufnahme der Angelschnur auf. Die Hülse (3) ist an der Innenwandung zumindest teilweise mit einem Steg (5) versehen, der etwa der Ausnehmung (2) des ersten Teiles (1) entspricht.

Schnitt A-A

## SINKER FÜR ANGELSCHNÜRE

Die Erfindung bezieht sich auf Sinker für Angelschnüre aus zwei formschlüssig und lösbar miteinander verbundenen Teilen.

Ein derartiger Sinker ist aus der DE-PS 922087 bekannt. Die beiden Sinkerteile weisen eine Schwalbenschwanzführung auf, wodurch sie in Richtung der Angelschnur gegeneinander verschoben und gleichzeitig an die Angelschnur geklemmt werden können.

Durch die zweiteilige, lösbare Konstruktion kann der Sinker leicht von der Angelschnur entfernt oder an einer anderen Stelle neu positioniert werden.

Nachteilig dabei ist, daß die Sinkerteile durch die Schwalbenschwanzführung .nicht mehr ganz einfach herstellbar sind und in der Regel die Schwalbenschwanzführung nur bei Sinkern mit größeren Abmessungen möglich ist.

Die US-PS 3273278 beschreibt eine Konstruktion für einen zweiteiligen Sinker, bei der das ellipsoidförmige Sinkergewicht in Richtung der Längsachse eine zylindrische Ausnehmung aufweist, in die eine zylindrische Kunststoffhülse eingeschoben wird. Auch bei dieser Sinkerkonstruktion ist es nachteilig, daß nur Sinker mit größeren Gewichten herstellbar sind.

Des weiteren ist es vor allem auch bei kleineren Sinkern aus Blei bekannt, den Sinker mit einem Schlitz zu versehen, in den die Angelschnur eingelegt wird. Zum Fixieren der Sinker wird der Schlitz mit einer geeigneten Zange zugequetscht, so daß der Sinker fest mit der Angelschnur verbunden ist.

Nachteilig dabei ist, daß der Sinker nur schwer wieder von der Angelschnur entfernbar ist, so daß meistens die Angelschnur mit dem Sinker abgeschnitten wird. Darüberhinaus ist das Verquetschen des Sinkers nur bei Verwendung sehr weicher Materialien wie Blei möglich. Da die Umweltbelastung der Gewässer durch verlorene Sinker beträchtlich ist, sollte die Verwendung von giftigem Blei nach Möglichkeit vermieden werden.

Der Erfindung liegt die Aufgabe zugrunde, einen Sinker für Angelschnüre aus zwei formschlüssig und lösbar miteinander verbundenen Teilen zu schaffen, der leicht mit der Angelschnur verbunden und wieder gelöst werden kann und auch in kleinen Abmessungen herstellbar ist. Darüberhinaus soll die Verwendung von umweltfreundlichen Materialien ermöglicht werden.

Erfindungsgemäß wird dies dadurch gelöst, daß das erste Teil aus einem Material mit vergleichsweise großem spezifischen Gewicht zylinderförmig mit einer durchgehenden Ausnehmung in Längsrichtung zur Aufnahme der Angelschnur und das zweite Teil als eine das erste Teil umschließende in Längsrichtung geschlitzte Hülse ausgeführt ist, wobei diese Hülse an der Innenwandung zumindest teilweise mit einem in Längsrichtung verlaufenden Steg versehen ist, der etwa der Ausnehmung des ersten Teiles entspricht.

Zum Befestigen des Sinkers an der Angelschnur werden beide Teile so aneinander gelegt, daß der Schlitz der Hülse und die Ausnehmung des ersten Teiles miteinander fluchten. Anschließend wird die Angelschnur in den Schlitz und in die Ausnehmung des ersten Teiles eingelegt.

Das erste Teil wird mit der eingelegten Schnur so lange verdreht, bis der Steg der Hülse und die Ausnehmung fluchten. Dann wird der erste Teil in die Hülse eingeschoben. Der Steg der Hülse drückt dabei die Schnur vollständig in die Ausnehmung des ersten Teiles, wodurch aufgrund der Reibung eine gegen Verschiebung ausreichend gesicherte Verbindung zwischen dem Sinker und der Schnur hergestellt wird. Es ist dabei vorteilhaft, wenn die Hülse aus einem federnden Material hergestellt wird und der Inndendurchmesser der Hülse etwas kleiner als der Außendurchmesser des ersten Teiles ausgeführt ist, so daß beim Ineinanderschieben der beiden Teile auf Grund der Federwirkung eine besonders gute ausreichend feste, jedoch lösbare Verbindung zwischen Hülse und erstem Teil hergestellt wird.

In einer besonders bevorzugten Ausgestaltung des Sinkers ist das erste Teil aus einer gesinterten Schwermetall-Legierung gefertigt, während das zweite Teil aus Kunststoff besteht.

Durch den Ersatz von giftigem Blei durch ungiftiges Schwermetall als Material für den Sinker wird eine Vergiftung von Wasservögeln, wie Schwäne und Enten, die verlorengegangene Sinker vielfach aufpicken, ausgeschlossen. Darüberhinaus wird eine umweltschädigende Belastung der Fischgewässer vermieden. Da das spezifische Gewicht von Schwermetall je nach Anteil an Binder zwischen 17 und 18,5 g/cm$^3$ liegt, während das von Blei bei 11,34 g/cm$^3$ liegt, können selbst bei Verwendung von Kunststoff als Material für die Hülse die Abmessungen zur Erzielung eines bestimmten gewünschten Gewichtes in der Regel gleich groß oder sogar kleiner gehalten werden, als bei Sinkern aus Blei. Zudem besitzt die Kunststoffhülse den Vorteil, daß sie in unterschiedlichen Tönungen eingefärbt werden kann, so daß der Sinker dem Gewässer angepaßt werden kann und damit nahezu unsichtbar ist.

In einer weiteren vorteilhaften Ausgestaltung der Erfindung ist die Hülse an einem Ende mit Ausnahme eines Schlitzes zur Durchführung der Angelschnur geschlossen, während der an der Innenwandung verlaufende Steg vom geschlossenen Ende ausgeht und mit einem gewissen Abstand vor dem Hülsenende endet. Auf diese Weise bleiben die beiden Teile selbst beim Einlegen der Angelschnur miteinander in Verbindung und lassen sich auf diese Weise besser handhaben und ineinander schieben.

Im folgenden wird die Erfindung anhand eines in der Zeichnung dargestellten Ausführungsbeispiels näher erläutert.

Figur 1 zeigt einen erfindungsgemäßen Sinker in Seitenansicht

Figur 2 gibt den Schnitt A-A der Figur 1 wieder

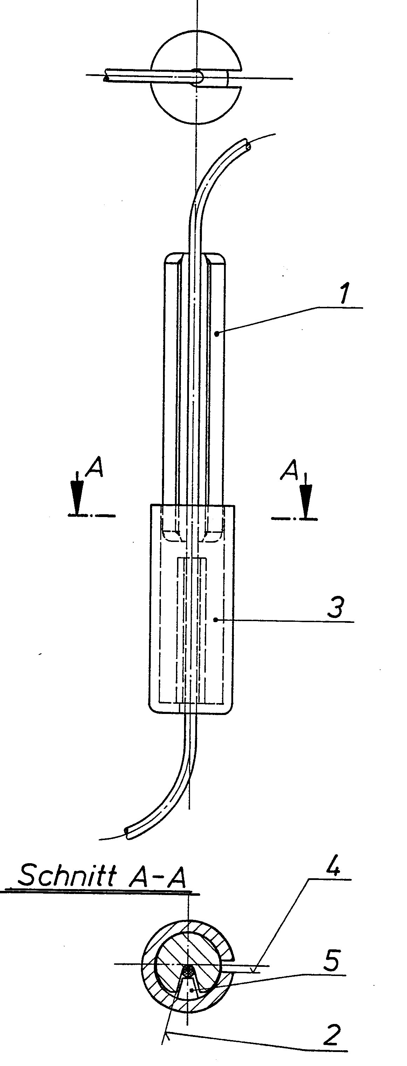

Der in Figur 1 und 2 dargestellte erfindungsgemäße zweiteilige Sinker besteht aus einem zylinderförmigen ersten Teil -1- aus Schwermetall und aus einem auf den ersten Teil -1- aufschiebbaren zweiten Teil in Form einer Hülse -3- aus Kunststoff. Das erste Teil weist in Längsrichtung eine sektorförmige Ausnehmung -2- zur Aufnahme der Angelschnur auf. Die an einem Ende geschlossene Hülse -3- ist in Längsrichtung durchgehend mit einem Schlitz -4- versehen. An der Innenwandung der Hülse -2-verläuft vom geschlossenen Ende der Hülse -3- aus in Längsrichtung ein keilförmiger Steg -5-, der in etwa der sektorförmigen Ausnehmung -2- des ersten Teiles -1- entspricht und um 90° versetzt zum Schlitz -4- der Hülse -3- angeordnet ist. Dieser Steg -5- verläuft nicht ganz bis zum offenen Ende der Hülse -3-, sondern endet mit einem gewissen Abstand davor.

In der in den Figuren 1 und 2 dargestellten Ansicht des erfindungsgemäßen Sinkers ist die Angelschnur bereits in die Ausnehmung -2- des ersten Teiles -1- eingelegt. Die Hülse -3- ist teilweise auf den ersten Teil -1- aufgeschoben und so angeordnet, daß der Steg -5- fluchtend mit der Ausnehmung -2- des ersten Teiles -1-verläuft, jedoch noch nicht in die Ausnehmung -2- eingreift. Zum Festklemmen des Sinkers an der Angelschnur wird die Hülse -3- bis zum Anschlag über das erste Teil -1- geschoben, so daß der Steg -5- der Hülse -3- in die Ausnehmung -2- des ersten Teiles -1- eingreift und die Angelschnur in der Ausnehmung -2- festklemmt. Zu einem vollständigen Lösen des Sinkers von der Angelschnur wird die Hülse -3- wiederum so weit verschoben, daß der Steg -5- nicht mehr in die Ausnehmung -2- des ersten Teiles eingreift, dann wird die Hülse -3- um 90° gegenüber dem ersten Teil -1- verdreht, bis der Schlitz -4- der Hülse und die Ausnehmung -2- des ersten Teiles übereinander liegen. In dieser Position wird auch die Angelschnur in den Sinker eingelegt. Dadurch, daß der Steg -5- der Hülse -3- nicht ganz bis zum offenen Ende reicht, ist ein Verdrehen der Hülse -3- gegenüber dem ersten Teil auch dann noch möglich, wenn die Hülse und das erste Teil -1- noch nicht vollständig voneinander getrennt sind. Die Handhabung des Sinkers wird auf diese Weise wesentlich verbessert.

**Ansprüche**

1. Sinker für Angelschnüre aus zwei formschlüssig und lösbar miteinander verbundenen Teilen, **dadurch gekennzeichnet,**daß das erste Teil (1) aus einem Material mit vergleichsweise großem spezifischen Gewicht zylinderförmig mit einer durchgehenden Ausnehmung (2) in Längsrichtung zur Aufnahme der Angelschnur und das zweite Teil als eine das erste Teil (1) umschließende in Längsrichtung geschlitzte Hülse (3) ausgeführt ist, wobei diese Hülse (3) an der Innenwandung zumindest teilweise mit einem in Längsrichtung verlaufenden Steg (5) versehen ist, der etwa der Ausnehmung (2) des ersten Teiles (1) entspricht.

2. Sinker für Angelschnüre nach Anspruch 1 oder 2, dadurch gekennzeichnet, daß das erste Teil (1) aus einer gesinterten Schwermetall-Legierung mit 90 - 98 % Wolfram und 2 - 10 Gew.% Nickel und/oder Kobalt und/oder Eisen als Binder besteht.

3. Sinker für Angelschnüre nach Anspruch 1 oder 2, dadurch gekennzeichnet, daß die Hülse (3) aus Kunststoff besteht.

4. Sinker für Angelschnüre nach Anspruch 3, dadurch gekennzeichnet, daß die Hülse (3) an einem Ende mit Ausnahme eines Schlitzes zur Durchführung der Angelschnur geschlossen ist und der an der Innenwandung verlaufende Steg (5) vom geschlossenen Ende ausgeht und mit einem Abstand vor dem Hülsenende endet.

0 176 887

Schnitt A-A

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 030 726 (KNAPTON)<br>* Spalte 1, Zeilen 49-72; Spalte 2, Zeilen 1-16,49-72; Spalte 3, Zeilen 1-22; Figuren 4,5 * | 1,3 | A 01 K 95/00 |
| | --- | | |
| A | US-A-2 992 508 (SCHMIDT)<br>* Figuren 1-4 * | 1 | |
| | --- | | |
| A | US-A-3 852 907 (HAUGHT)<br>* Zusammenfassung * | 2 | |
| | --- | | |
| A | GB-A-1 476 007 (PROUTEN) | | |
| | --- | | |
| A | FR-A- 610 687 (SIBEUX) | | |
| | | | RECHERCHIERTE SACHGEBIETE (Int. Cl.4) |
| | --- | | |
| A | BE-A- 569 118 (BARON) | | A 01 K |
| | ----- | | |

Der vorliegende Recherchenbericht wurde für alle Patentansprüche erstellt.

| Recherchenort<br>DEN HAAG | Abschlußdatum der Recherche<br>09-12-1985 | Prüfer<br>VERDOODT S.J.M. |
|---|---|---|